# EUROPÄISCHE PATENTSCHRIFT

(11) **EP 3 308 440 B1**
(45) Veröffentlichungstag und Bekanntmachung des Hinweises auf die Patenterteilung: **25.03.2020**
(21) Anmeldenummer: 15744918.2
(22) Anmeldetag: 30.07.2015
(51) Int. Cl.: H02J 3/18, H02M 7/5387, H02M 7/483, H02M 1/00

(54) **BLINDLEISTUNGSEINSPEISUNG IN EIN WECHSELSPANNUNGSNETZ**
REACTIVE POWER FEED INTO AN ALTERNATING VOLTAGE NETWORK
INJECTION DE PUISSANCE RÉACTIVE DANS UN RÉSEAU DE TENSION ALTERNATIVE

(43) Veröffentlichungstag der Anmeldung: 18.04.2018
(73) Patentinhaber: Siemens Aktiengesellschaft, 80333 München (DE)
(72) Erfinder: LOTTES, Jürgen, 90491 Nürnberg (DE); PIESCHEL, Martin, 90473 Nürnberg (DE); STEGER, Manuel, 90408 Nürnberg (DE)
(86) Internationale Anmeldenummer: PCT/EP2015/067588
(87) Internationale Veröffentlichungsnummer: WO 2017/016613

(56) Entgegenhaltungen:
- EP-A1- 2 506 415
- EP-A1- 2 541 752
- WO-A1-2013/023981
- WO-A1-2013/087110
- JP-A- 2013 005 694
- YAN XIE ET AL: "Study on Reactive Power Compensation Control of STATCOM Based on MMC", APPLIED MECHANICS AND MATERIALS, Bd. 530-531, 27. Februar 2014 (2014-02-27) , Seiten 1022-1025, XP055258676, DOI: 10.4028/www.scientific.net/AMM.530-531.102 2

## Beschreibung

Die Erfindung bezieht sich auf ein Verfahren zum Einspeisen von Blindleistung in ein Wechselspannungsnetz mittels eines modularen Multilevelumrichters, der zumindest eine Reihenschaltung mit mindestens zwei in Reihe geschalteten Teilmodulen und einer Induktivität umfasst, wobei jedes Teilmodul jeweils einen eigenen Zwischenkreis aufweist.

Aus der europäischen Patentanmeldung EP 2 506 415 A1 ist ein Verfahren nach dem Oberbegriff des Patentanspruchs 1 bekannt. Diese Patentanmeldung offenbart einen modularen Multilevelstromrichter, bei dem die Zwischenkreisspannung der Module gemessen wird. Der gemessene Wert der Zwischenkreisspannung wird zu einer modulinternen Steuerung übertragen. Diese modulinterne Steuerung ist mit einer übergeordneten Steuerung verbunden, die die von dem Stromrichter erzeugte Blindleistung steuert.

Modulare Multilevelumrichter sind beispielsweise aus der Veröffentlichungsschrift "Modular Multilevel Converter: An universal concept for HVDC-Networks and extended DC-Bus-Applications" (R. Marquardt, 2010 International Power Electronics Conference, Seiten 502 bis 507, 978-1-4244-5393-1/10, 2010 IEEE) und der internationalen Veröffentlichungsschrift WO 2015/036149 A1 bekannt.

Ein modularer Multilevelumrichter kann bekanntermaßen zur Stabilisierung eines Wechselspannungsnetzes eingesetzt werden, indem mit ihm gezielt Blindleistung in das Wechselspannungsnetz eingespeist wird.

Die abgegebene bzw. in das Wechselspannungsnetz eingespeiste Blindleistung beeinflusst den Effektivwert der Netzspannung des Wechselspannungsnetzes, und zwar in Abhängigkeit von der jeweiligen Netzkonfiguration, insbesondere der jeweiligen Netzimpedanz an der Schnittstelle zum Multilevelumrichter. Ändert sich die Netzkonfiguration, z. B. durch Wegschalten von Übertragungsleitungen innerhalb des Wechselspannungsnetzes, so muss die Blindleistungsabgabe durch den Multilevelumrichter möglichst rasch angepasst werden, um eine übermäßige Änderung des Effektivwerts der Netzspannung des Wechselspannungsnetzes zu verhindern.

Geschieht die Anpassung der Blindleistungsabgabe nicht oder nicht rechtzeitig, so können - beispielsweise im Falle einer kapazitiven Blindleistungseinspeisung - im Wechselspannungsnetz Überspannungen auftreten, die von Netzschutzgeräten nach etwa zwei bis fünf Netzperioden erkannt werden und zu einem Wegschalten des betroffenen Netzbereichs führen können. Ein solches fehlerhaftes Wegschalten von Netzbereichen aufgrund von in falschem Umfange eingespeister Blindleistung ist aus verständlichen Gründen unerwünscht.

Entsprechendes gilt für den Fall einer induktiven Blindleistungseinspeisung durch einen Multilevelumrichter: Kommt es zu einer Veränderung der Netzkonfiguration, so kann der Effektivwert der Netzspannung abrupt abfallen, wodurch es wiederum zu einem unerwünschten Erkennen von Netzfehlern und zu einem fehlerhaften Abschalten von Netzabschnitten kommen kann.

Zusammengefasst besteht bei der Blindleistungseinspeisung, sowohl bei der induktiven als auch bei der kapazitiven, das Problem, dass im Falle einer Änderung der Netzkonfiguration schnellstmöglich eine Anpassung der Blindleistungserzeugung erfolgen muss, um ein fehlerhaftes Auslösen von Schutzgeräten zu vermeiden.

Der Erfindung liegt demgemäß die Aufgabe zugrunde, ein Verfahren zum Einspeisen von Blindleistung in ein Wechselspannungsnetz anzugeben, bei dem die oben beschriebenen Probleme im Falle einer Veränderung der Netzkonfiguration nicht, zumindest nicht mehr so signifikant wie bisher, auftreten.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist vorgesehen, dass die Blindleistungserzeugung in Abhängigkeit von der Zwischenkreisspannung zumindest einer der Zwischenkreise gesteuert wird.

Ein wesentlicher Vorteil des erfindungsgemäßen Verfahrens ist darin zu sehen, dass durch die erfindungsgemäße Auswertung der Zwischenkreisspannungen der Zwischenkreise von Teilmodulen des Multilevelumrichters besonders schnell, und zwar viel schneller als bisher, das Auftreten einer Änderung der Netzkonfiguration des Wechselspannungsnetzes erkannt werden kann und demgemäß die Einspeisung von Blindleistung an die jeweils neue Konfiguration besonders schnell angepasst werden kann. Ein unerwünschtes Auslösen von Schutzgeräten lässt sich somit im Allgemeinen vermeiden.

Als besonders vorteilhaft wird es vorgesehen, dass die Blindleistungserzeugung reduziert wird, wenn die Amplitude einer Oberschwingung - bezogen auf die Netzfrequenz des Wechselspannungsnetzes - der Zwischenkreisspannung einen Schwellenwert erreicht oder überschreitet. Im Falle einer Auswertung der Amplitude einer Oberschwingung ist es deutlich schneller als im Falle der Auswertung der Grundschwingung möglich, auf eine Umkonfiguration des Wechselspannungsnetzes bzw. auf eine Notwendigkeit einer Reduktion der Blindleistungserzeugung zu schließen.

Alternativ wird ein Spannungsmittelwert ermittelt, der den Mittelwert der Zwischenkreisspannungen der Zwischenkreise aller Teilmodule zum jeweiligen Zeitpunkt angibt.

Liegt ein solcher Spannungsmittelwert vor, so ist es vorteilhaft, dass die Blindleistungserzeugung reduziert wird, sobald die Amplitude einer Oberschwingung des Spannungsmittelwerts - bezogen auf die Netzfrequenz des Wechselspannungsnetzes - einen Schwellenwert erreicht oder überschreitet.

Als besonders vorteilhaft wird es angesehen, wenn die Steuerung des Multilevelumrichters in Abhängigkeit von der Oberwelle mit der doppelten Netzfrequenz des Wechselspannungsnetzes durchgeführt wird; demgemäß ist bei einer besonders vorteilhaften Ausgestaltung des Verfahrens vorgesehen, dass die Blindleistungserzeugung reduziert wird, wenn die Amplitude der Oberwelle mit der doppelten Netzfrequenz - bezogen auf die Netzfrequenz des Wechselspannungsnetzes - des Spannungsmittelwerts den Schwellenwert erreicht oder überschreitet.

Bevorzugt erfolgt das Überwachen der Amplitude der Oberwelle mit der doppelten Netzfrequenz dahingehend, ob der Schwellenwert erreicht oder überschritten wird, unter Einbezug eines Effektivwertbildners oder eines Hüllkurvendetektors.

Darüber hinaus ist es vorteilhaft, das Verfahren in Abhängigkeit davon durchzuführen, ob es sich um eine kapazitive oder eine induktive Blindleistungseinspeisung handelt. Demgemäß ist bei einer weiteren Fortbildung des Verfahrens vorgesehen, dass für den Vergleich im Falle einer kapazitiven Blindleistungseinspeisung ein erster Schwellenwert und im Falle einer induktiven Blindleistungseinspeisung ein zweiter Schwellenwert, der sich vom ersten Schwellenwert unterscheidet, herangezogen wird.

Vorzugsweise werden der Schwellenwert oder die Schwellenwerte in Abhängigkeit von dem Gleichanteil des Spannungsmittelwerts oder der Amplitude der Grundschwingung - bezogen auf die Netzfrequenz des Wechselspannungsnetzes - des Spannungsmittelwerts bestimmt.

Besonders einfach und damit vorteilhaft lässt sich das Verfahren anhand von Schwellenwertkennlinien durchführen. Demgemäß wird es als vorteilhaft angesehen, wenn der Schwellenwert oder die Schwellenwerte in Abhängigkeit von einer Schwellenwertkennlinie, insbesondere im Falle einer kapazitiven Blindleistungseinspeisung in Abhängigkeit von einer für eine kapazitive Blindleistungseinspeisung vorgegebenen ersten Schwellenwertkennlinie oder im Falle einer induktiven Blindleistungseinspeisung in Abhängigkeit von einer für eine induktive Blindleistungseinspeisung vorgegebenen zweiten Schwellenwertkennlinie, bestimmt werden.

Vorzugsweise wird das Maß, mit dem die Amplitude der Oberschwingung des Spannungsmittelwerts den Schwellenwert überschreitet, bestimmt und es wird dieses Maß zur Bestimmung des Ausmaßes der Reduktion der Blindleistungseinspeisung herangezogen.

Darüber hinaus ist es vorteilhaft, wenn die Amplitude einer Oberschwingung des Spannungsmittelwerts als Rückkopplungsgröße zur Regelung der Höhe der jeweiligen Blindleistungseinspeisung herangezogen wird.

Die Teilmodule des Multilevelumrichters können in vorteilhafter Weise auch derart angesteuert werden, dass durch den Multilevelumrichter ein Kreisstrom fließt, der eine Oberschwingung mit einer Frequenz, die einem ganzzahligen Vielfachen des Dreifachen der Netzfrequenz des Wechselspannungsnetzes entspricht, aufweist.

Bei der letztgenannten Ausgestaltung ist es vorteilhaft, wenn die Blindleistungserzeugung reduziert wird, wenn die Oberschwingungsamplitude, die sich auf die Oberschwingung mit dem ganzzahligen Vielfachen des Dreifachen der Netzfrequenz bezieht, des Spannungsmittelwerts den Schwellenwert erreicht oder überschreitet. Bei Heranziehung einer Oberschwingung mit dem ganzzahligen Vielfachen des Dreifachen der Netzfrequenz ist eine besonders schnelle Erfassung einer Konfigurationsänderung des Wechselspannungsnetzes und damit eine besonders schnelle Anpassung der Blindleistungseinspeisung möglich.

Die Erfindung bezieht sich darüber hinaus auf eine Ansteuereinheit für einen modularen Multilevelumrichter, der zumindest eine Reihenschaltung mit mindestens zwei in Reihe geschalteten Teilmodulen und einer Induktivität umfasst, wobei jedes Teilmodul jeweils einen eigenen Zwischenkreis aufweist.

Bezüglich einer solchen Ansteuereinheit ist vorgesehen, dass diese derart ausgebildet ist, dass sie den Multilevelumrichter derart ansteuert, dass dieser Blindleistung in ein Wechselspannungsnetz einspeist, wobei sie die Zwischenkreisspannung zumindest eines der Zwischenkreise auswertet und die Blindleistungserzeugung in Abhängigkeit davon steuert.

Bezüglich der Vorteile der erfindungsgemäßen Ansteuereinheit sei auf die obigen Ausführungen im Zusammenhang mit dem erfindungsgemäßen Verfahren verwiesen, da die Vorteile des Verfahrens für die erfindungsgemäße Ansteuereinheit entsprechend gelten.

Vorzugsweise weist die Ansteuereinheit eine Recheneinheit auf, die derart programmiert ist, dass sie das oben beschriebene Verfahren durchführen kann. Vorteilhafte Ausgestaltungen für eine geeignete Ansteuereinheit sind in den Figuren gezeigt.

Darüber hinaus bezieht sich die Erfindung auf eine Anordnung mit einer Ansteuereinheit, wie sie oben beschrieben worden ist, sowie auf einen Multilevelumrichter, der von dieser Ansteuereinheit angesteuert wird. Bezüglich der Vorteile dieser Anordnung sei auf die obigen Ausführungen verwiesen.

Die Erfindung wird nachfolgend anhand von Ausführungsbeispielen näher erläutert; dabei zeigen beispielhaft
- Figur 1: ein Ausführungsbeispiel für eine Anordnung, die Blindleistung in ein Wechselspannungsnetz einspeist,
- Figur 2: ein Ausführungsbeispiel für einen Multilevelumrichter, der bei der Anordnung gemäß Figur 1 eingesetzt werden kann,
- Figur 3: ein Ausführungsbeispiel für ein Phasenmodul, das bei dem Multilevelumrichter gemäß Figur 2 eingesetzt werden kann,
- Figur 4: ein Ausführungsbeispiel für ein Teilmodul, das zur Bildung des Phasenmoduls gemäß Figur 3 eingesetzt werden kann,
- Figur 5: ein Ausführungsbeispiel für eine Umrichtereinheit, die bei dem Teilmodul gemäß Figur 4 eingesetzt werden kann,
- Figur 6: ein weiteres Ausführungsbeispiel für eine Umrichtereinheit, die bei dem Teilmodul gemäß Figur 4 eingesetzt werden kann,
- Figur 7: ein Ausführungsbeispiel für eine Speichereinheit, die bei dem Teilmodul gemäß Figur 4 eingesetzt werden kann,
- Figur 8: ein Ausführungsbeispiel für eine Ansteuereinheit, die zur Ansteuerung eines Multilevelumrichters der Anordnung gemäß Figur 1 geeignet ist,
- Figur 9: ein Ausführungsbeispiel für eine Betriebsgrenzenanpassungseinrichtung, die bei der Ansteuereinheit gemäß Figur 8 eingesetzt werden kann,
- Figur 10: ein weiteres Ausführungsbeispiel für eine Betriebsgrenzenanpassungseinrichtung, die bei der Ansteuereinheit gemäß Figur 8 eingesetzt werden kann,
- Figur 11: ein Ausführungsbeispiel für ein Amplitudenfilter, das bei der Betriebsgrenzenanpassungseinrichtung gemäß Figur 9 eingesetzt werden kann,
- Figur 12: ein Ausführungsbeispiel für eine Sollwertgenerierungseinrichtung, die bei der Ansteuereinheit gemäß Figur 8 eingesetzt werden kann,
- Figur 13: ein Ausführungsbeispiel für einen Multilevelumrichter, der bei der Anordnung gemäß Figur 1 eingesetzt werden kann und durch eine Brückenschaltung von Phasenmodulen gebildet wird,
- Figur 14: ein Ausführungsbeispiel für einen Multilevelumrichter, der bei der Anordnung gemäß Figur 1 eingesetzt werden kann und durch eine Sternschaltung von Phasenmodulen gebildet wird und
- Figur 15: ein Ausführungsbeispiel für einen Multilevelumrichter, der zur Erzeugung von Blindleistung für ein einphasiges Wechselspannungsnetz geeignet ist und nur ein einziges Phasenmodul aufweist.

In den Figuren werden der Übersicht halber für identische oder vergleichbare Komponenten stets dieselben Bezugszeichen verwendet.

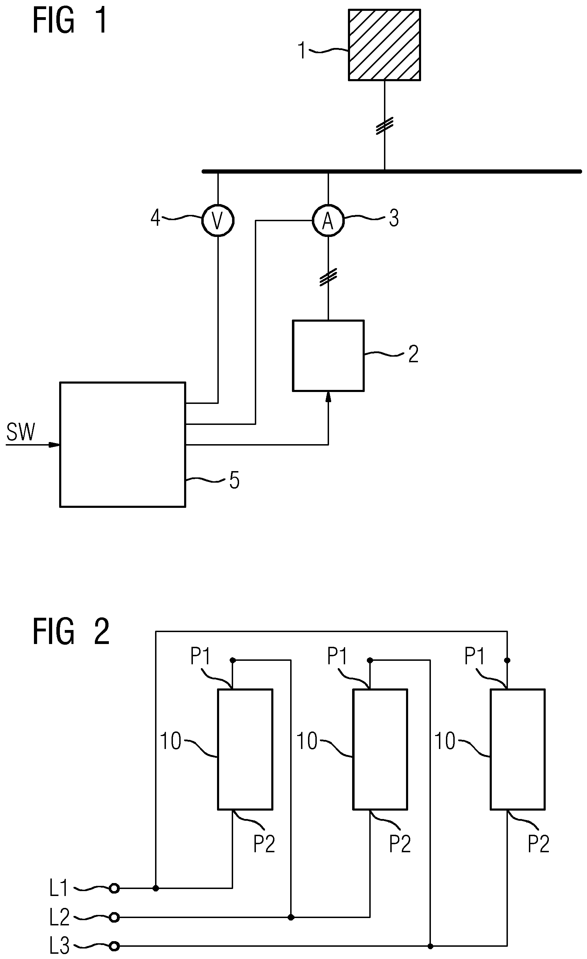

Die Figur 1 zeigt ein Wechselspannungsnetz 1, in das ein Multilevelumrichter 2 Blindleistung einspeist. Der von dem Multilevelumrichter 2 erzeugte Strom I wird mittels einer Strommesseinrichtung 3 gemessen. Die an dem Wechselspannungsnetz 1 anliegende Wechselspannung wird mittels einer Spannungsmesseinrichtung 4 gemessen.

Die Messwerte der Strommesseinrichtung 3 und die Messwerte der Spannungsmesseinrichtung 4 gelangen zu einer Ansteuereinheit 5, die die Messwerte auswertet und anhand eines eingangsseitig anliegenden Blindleistungssollwerts SW den Multilevelumrichter 2 ansteuert. Zum Zwecke der Ansteuerung besteht zwischen dem Multilevelumrichter 2 und der Ansteuereinheit 5 eine bidirektionale Verbindung.

Die Figur 2 zeigt ein Ausführungsbeispiel für einen Multilevelumrichter 2, der bei der Anordnung gemäß Figur 1 eingesetzt werden kann. Man erkennt drei Phasenmodule 10, die in einer Dreieckschaltung verschaltet sind. Die äußeren Anschlüsse der Phasenmodule 10 sind in der Figur 2 mit den Bezugszeichen P1 und P2 gekennzeichnet; die äußeren Phasenleiteranschlüsse des dreiphasigen Multilevelumrichters 2 tragen die Bezugszeichen L1, L2 und L3.

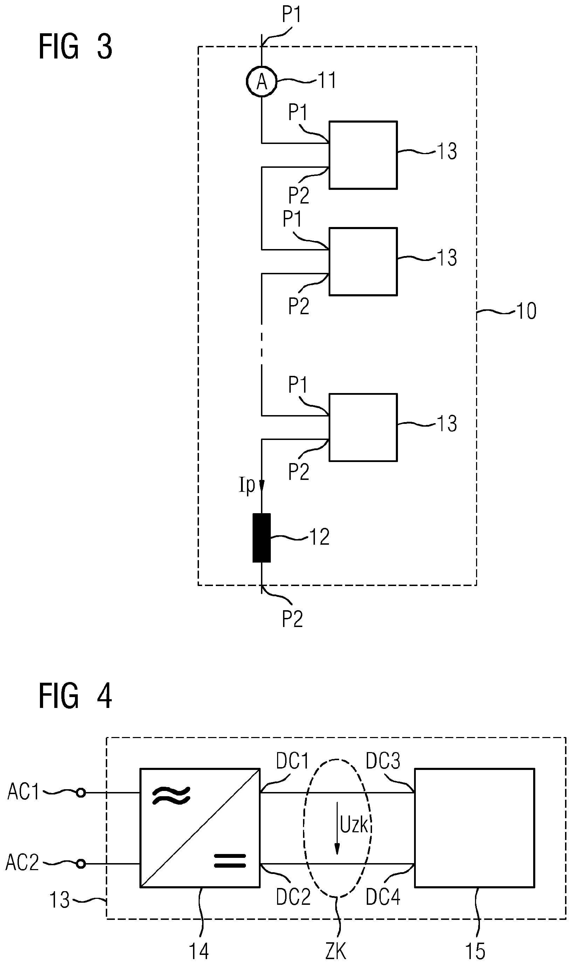

Die Figur 3 zeigt ein Ausführungsbeispiel für ein Phasenmodul 10, das bei dem Multilevelumrichter 2 gemäß Figur 2 eingesetzt werden kann. Das Phasenmodul 10 weist einen Stromsensor 11, eine Induktivität 12 sowie eine Mehrzahl an Teilmodulen 13 auf, die elektrisch in Reihe geschaltet sind und gemeinsam eine elektrische Reihenschaltung bilden.

Der durch die Reihenschaltung bzw. durch das Phasenmodul 10 fließende Phasenmodulstrom ist in der Figur 3 mit dem Bezugszeichen Ip gekennzeichnet.

Die Ansteuerung der Teilmodule 13 des Phasenmoduls 10 erfolgt mittels der Ansteuereinheit 5 gemäß Figur 1.

Die Figur 4 zeigt ein Ausführungsbeispiel für ein Teilmodul 13, das beim Phasenmodul 10 gemäß Figur 3 eingesetzt werden kann. Das Teilmodul 13 weist eingangsseitig eine Umrichtereinheit 14 auf, die über einen Zwischenkreis ZK mit einer Speichereinheit 15 des Teilmoduls 13 in Verbindung steht. Die wechselspannungsseitigen Anschlüsse der Umrichtereinheit 14 sind in der Figur 4 mit den Bezugszeichen AC1 und AC2 gekennzeichnet; die gleichspannungsseitgen Anschlüsse der Umrichtereinheit 14 tragen in der Figur die Bezugszeichen DC1 und DC2.

An den Anschlüssen DC1 und DC2 der Umrichtereinheit 14 liegt eine Zwischenkreisspannung Uzk an, die gleichzeitig auch die Eingangsspannung an den Eingangsanschlüssen DC3 und DC4 der Speichereinheit 15 bildet. Der Gleichspannungszwischenkreis zwischen der Umrichtereinheit 14 und der Speichereinheit 15 ist in der Figur 4 mit dem Bezugszeichen ZK gekennzeichnet.

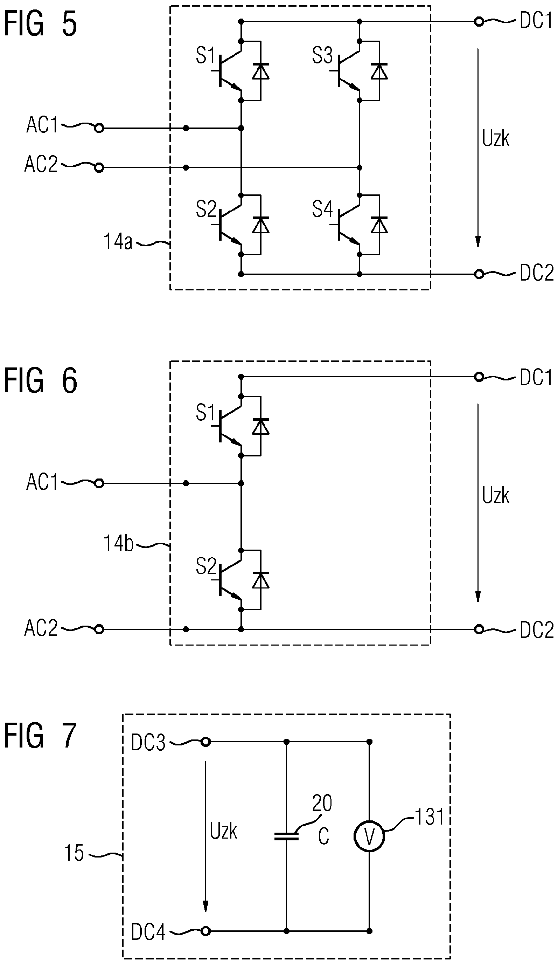

Die Figur 5 zeigt ein Ausführungsbeispiel für eine Umrichtereinheit 14, die bei dem Teilmodul 13 gemäß Figur 4 eingesetzt werden kann. Man erkennt vier Schalter S1, S2, S3 und S4, die eine Brückenschaltung bilden. Die äußeren Anschlüsse dieser Brückenschaltung bilden die Anschlüsse DC1 und DC2, die an den Zwischenkreis ZK gemäß Figur 4 angeschlossen sind.

Die Figur 6 zeigt ein weiteres Ausführungsbeispiel für eine Umrichtereinheit 14, die bei dem Teilmodul 13 gemäß Figur 4 eingesetzt werden kann. Die Umrichtereinheit 14 gemäß Figur 6 umfasst lediglich zwei Schalter S1 und S2, die eine Halbbrücke bilden.

Die Figur 7 zeigt ein Ausführungsbeispiel für eine Speichereinheit 15, die bei dem Teilmodul 13 gemäß Figur 4 eingesetzt werden kann. Man erkennt einen Kondensator 20, an dem die Zwischenkreisspannung Uzk des Zwischenkreises ZK gemäß Figur 4 anliegt. Darüber hinaus erkennt man eine Spannungsmesseinrichtung 131, die die Spannung am Kondensator 20 und damit die Zwischenkreisspannung Uzk misst. Die Messwerte der Spannungseinrichtung 131 gelangen zu der Ansteuereinheit 5 gemäß Figur 1, um dieser eine Ansteuerung des Multilevelumrichters 2 gemäß Figur 1 zu ermöglichen.

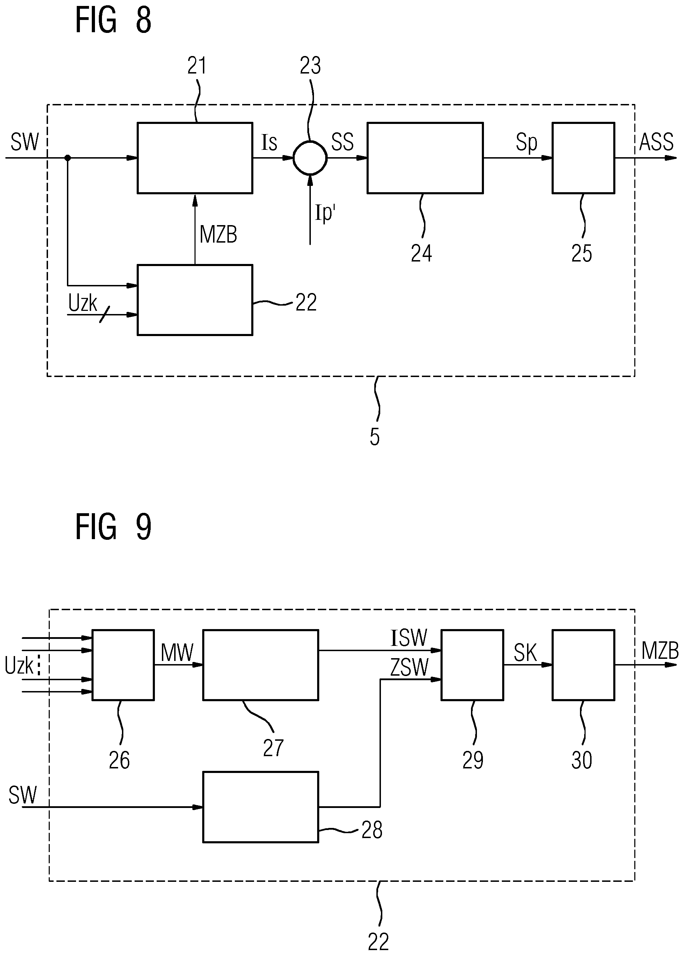

Die Figur 8 zeigt ein Ausführungsbeispiel für eine Ansteuereinheit 5, die bei der Anordnung gemäß Figur 1 eingesetzt werden kann. Die Ansteuereinheit 5 wird vorzugsweise durch einen Mikrocontroller, einen Signalprozessor, einen FPGA (frei programmierbaren Logikbaustein) oder SPS gebildet oder weist eine oder mehrere der genannten Komponenten vorzugsweise zumindest auch auf.

Die Ansteuereinheit 5 gemäß Figur 8 weist eingangsseitig eine Sollwertgenerierungseinrichtung 21 auf, die mit dem Blindleistungssollwert SW (vgl. Figur 1) beaufschlagt ist.

Darüber hinaus weist die Ansteuereinheit 5 gemäß Figur 8 eingangsseitig eine Betriebsgrenzenanpassungseinrichtung 22 auf, die ebenfalls mit dem Blindleistungssollwert SW beaufschlagt ist. An der Betriebsgrenzenanpassungseinrichtung 22 liegen außerdem die Zwischenkreisspannungen Uzk aller Zwischenkreise ZK (vgl. Figur 4) aller Teilmodule 13 (vgl. Figur 3) aller Phasenmodule 10 gemäß Figur 2 an.

Die Betriebsgrenzenanpassungseinrichtung 22 wertet die eingangsseitig anliegenden Zwischenkreisspannungen Uzk aus und erzeugt einen Wert MZB, der die - mit Blick auf die vorliegenden Zwischenkreisspannungen Uzk - jeweils maximal zulässige Blindleistung angibt. Der Wert MZB wird in die Sollwertgenerierungseinrichtung 21 eingespeist.

Die Sollwertgenerierungseinrichtung 21 wertet den eingangsseitig anliegenden Blindleistungssollwert SW sowie den Wert MZB, der die maximale zulässige Blindleistung angibt, aus und erzeugt ausgangsseitig für jedes Phasenmodul 10 (vgl. Figur 2) des Multilevelumrichters 2 jeweils einen Sollstrom Is, der in einen nachgeordneten Vergleicher 23 eingespeist wird. In den Vergleicher 23 wird für die Phasenmodule 10 gemäß Figur 2 bzw. Figur 3 jeweils nicht nur der Sollstrom Is eingespeist, sondern auch ein den Phasenmodulstrom Ip, der von dem Stromsensor 11 des jeweiligen Phasenmoduls 10 (vgl. Figur 3) gemessen worden ist, angebender Strommesswert Ip'.

Der Vergleicher 23 vergleicht den Sollstrom Is mit dem tatsächlichen Phasenmodulstrom Ip (bzw. dem Strommesswert Ip') und erzeugt für jedes Phasenmodul 10 ausgangsseitig jeweils ein Steuersignal SS, das in einen nachgeordneten Stromregler 24 eingespeist wird.

Der Stromregler 24 erzeugt in Abhängigkeit von dem Steuersignal SS ausgangsseitig ein Steuersignal Sp, beispielsweise in Form einer Stellspannung, mit dem ein nachgeordneter Pulsgenerator 25 angesteuert wird.

Der Pulsgenerator 25 erzeugt für jedes Phasenmodul 10 des Multilevelumrichters 2, und damit für jedes Teilmodul 13 des jeweiligen Phasenmoduls 10, ein Ansteuersignal ASS, mit dem das jeweilige Phasenmodul 10 derart angesteuert wird, dass der jeweilige Phasenmodulstrom Ip im jeweiligen Phasenmodul 10 dem von der Sollwertgenerierungseinrichtung 21 ermittelten Sollstrom Is bestmöglich entspricht. Durch den Vergleicher 23 und die Rückkopplung der tatsächlichen Messwerte Ip' wird dabei eine Regelschleife gebildet.

Die Figur 9 zeigt ein Ausführungsbeispiel für eine Betriebsgrenzenanpassungseinrichtung 22, die bei der Ansteuereinheit 5 gemäß Figur 8 eingesetzt werden kann.

Die Betriebsgrenzenanpassungseinrichtung 22 weist eingangsseitig einen Mittelwertbildner 26 auf, der die eingangsseitig anliegenden Zwischenkreisspannungen Uzk aller Zwischenkreise ZK aller Teilmodule 13 aller Phasenmodule 10 des Multilevelumrichters 2 gemäß Figur 1 verarbeitet und ausgangsseitig einen Spannungsmittelwert, nachfolgend kurz Mittelwert MW genannt, erzeugt. Der Mittelwert MW gelangt zu einem Amplitudenfilter 27, das ausgangsseitig einen Amplitudenwert ISW erzeugt, der die Ist-Spannungswelligkeit des Mittelwerts MW für eine vorgegebene Oberwelle (bzw. Oberschwingung, vorzugsweise für die erste Oberwelle mit der doppelten Netzfrequenz des Wechselspannungsnetzes 1 gemäß Figur 1) in Form der Amplitude für diese vorgegebene Oberwelle bzw. Oberschwingung im Mittelwert MW angibt.

Der Amplitudenwert ISW gelangt zu einem Komparator 29, an dem eingangsseitig außerdem ein Wert ZSW anliegt, der die zulässige Spannungswelligkeit angibt. Der Wert ZSW wird von einer Betriebsgrenzenkennlinieneinrichtung 28 gebildet, an der eingangsseitig der Blindleistungssollwert SW anliegt. Die Betriebsgrenzenkennlinieneinrichtung 28 berücksichtigt bei der Bildung des Werts ZSW, dass bei hohen Blindleistungssollwerten SW mit einer höheren Spannungswelligkeit zu rechnen ist als bei niedrigen Blindleistungssollwerten SW; demgemäß wird der Wert ZSW, der die zulässige Spannungswelligkeit angibt, bei hohen Blindleistungssollwerten SW größer sein als bei kleinen Blindleistungssollwerten SW.

Die Betriebsgrenzenkennlinieneinrichtung 28 wird den Wert ZSW vorzugsweise anhand einer vorab abgespeicherten Kennlinie bestimmen, die für verschiedene Blindleistungssollwerte SW jeweils einen Wert ZSW vorgibt.

Der Komparator 29 vergleicht den Amplitudenwert ISW, der die Ist-Spannungswelligkeit angibt, mit dem Wert ZSW, der die zulässige Spannungswelligkeit angibt, und erzeugt ausgangsseitig ein Komparatorsignal SK, mit dem ein Blindleistungsbegrenzer 30 angesteuert wird. Der Blindleistungsbegrenzer 30 hat die Aufgabe, ausgangsseitig den Wert MZB zu erzeugen, der die maximal zulässige Blindleistung zum jeweiligen Zeitpunkt angibt und mit dem die Ansteuerung der Sollwertgenerierungseinrichtung 21 gemäß Figur 8 ermöglicht wird.

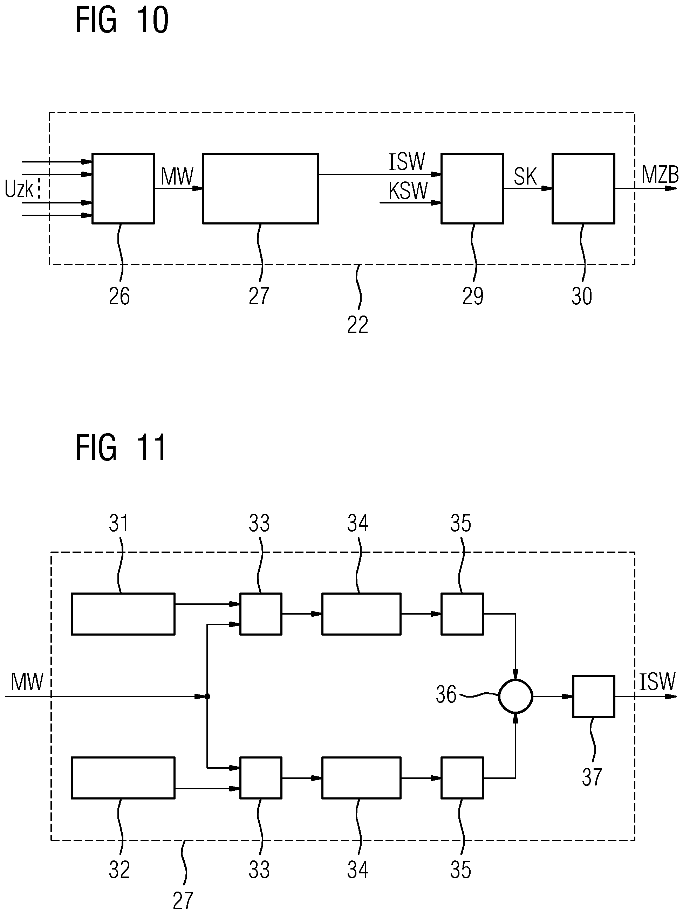

Die Figur 10 zeigt ein weiteres Ausführungsbeispiel für eine Betriebsgrenzenanpassungseinrichtung 22, die bei der Ansteuereinheit 5 gemäß Figur 8 eingesetzt werden kann.

Die Betriebsgrenzenanpassungseinrichtung 22 gemäß Figur 10 weist einen Mittelwertbildner 26, ein Amplitudenfilter 27, einen Komparator 29 sowie einen Blindleistungsbegrenzer 30 auf; die Komponenten 26, 27, 29 und 30 können den Komponenten 26, 27, 29 und 30 gemäß Figur 9 entsprechen; diesbezüglich sei auf die obigen Ausführungen im Zusammenhang mit der Figur 9 verwiesen.

Im Unterschied zu dem Ausführungsbeispiel gemäß Figur 9 ist bei dem Ausführungsbeispiel gemäß Figur 10 keine Betriebsgrenzenkennlinieneinrichtung 28 vorhanden, die einen von dem jeweiligen Blindleistungssollwert SW abhängigen Wert ZSW, der die zulässige Spannungswelligkeit angibt, erzeugen würde. Stattdessen wird der Komparator 29 bei dem Ausführungsbeispiel gemäß Figur 10 mit einem konstanten Wert KSW gespeist, der - unabhängig von dem jeweiligen Blindleistungssollwert SW - eine maximal zulässige Spannungswelligkeit angibt.

Der Komparatorvergleich durch den Komparator 29 erfolgt somit in Abhängigkeit von dem jeweiligen Amplitudenwert ISW, der die jeweilige Ist-Spannungswelligkeit angibt, sowie dem konstanten Wert KSW, der eine konstante zulässige Spannungswelligkeit vorgibt.

Im Übrigen sei bezüglich der Funktionsweise der Betriebsgrenzenanpassungseinrichtung 22 gemäß Figur 10 auf die Ausführungen im Zusammenhang mit der Figur 9 verwiesen.

Die Figur 11 zeigt ein Ausführungsbeispiel für ein Amplitudenfilter 27, das bei der Betriebsgrenzenanpassungseinrichtung 22 gemäß Figur 9 eingesetzt werden kann.

Das Amplitudenfilter 27 gemäß Figur 11 weist eingangsseitig zwei Produktbildner 33 auf, die jeweils mit dem Mittelwert MW des vorgeordneten Mittelwertbildners 26 (vgl. Figur 9) beaufschlagt sind. Darüber hinaus liegt an den beiden Produktbildnern 33 jeweils das Ausgangssignal eines Sinusgenerators 31 bzw. eines Kosinusgenerators 32 an. Der Sinusgenerator 31 und der Kosinusgenerator 32 erzeugen sinus- bzw. kosinusförmige Signale mit einem Vielfachen, vorzugsweise dem Doppelten, der Netzfrequenz des Wechselspannungsnetzes 1 gemäß Figur 1. Im Falle einer Netzfrequenz von 50 Hz erzeugen der Sinusgenerator 31 und der Kosinusgenerator 32 also bevorzugt sinus- bzw. kosinusförmige Signale mit einer Frequenz von 100 HZ.

Die Ausgangssignale der beiden Produktbildner 33 gelangen zu Tiefpässen 34 sowie Quadrierern 35, deren Ausgangssignale mittels eines Summenbildners 36 zu einem Summenwert verarbeitet werden. Aus dem Summenwert des Summenbildners 36 wird mittels eines Wurzelbildners 37 die Wurzel gebildet, wodurch ausgangsseitig der Amplitudenwert ISW gebildet wird, der die Ist-Spannungswelligkeit im Mittelwert MW des Mittelwertbildners 26 angibt.

Alternativ oder zusätzlich können der Sinusgenerator 31 und der Kosinusgenerator 32 sinus- bzw. kosinusförmige Signale mit einem Vielfachen der dritten Oberschwingung erzeugen, um einen Kreisstrom innerhalb des Multilevelumrichters 2 zu erzeugen.

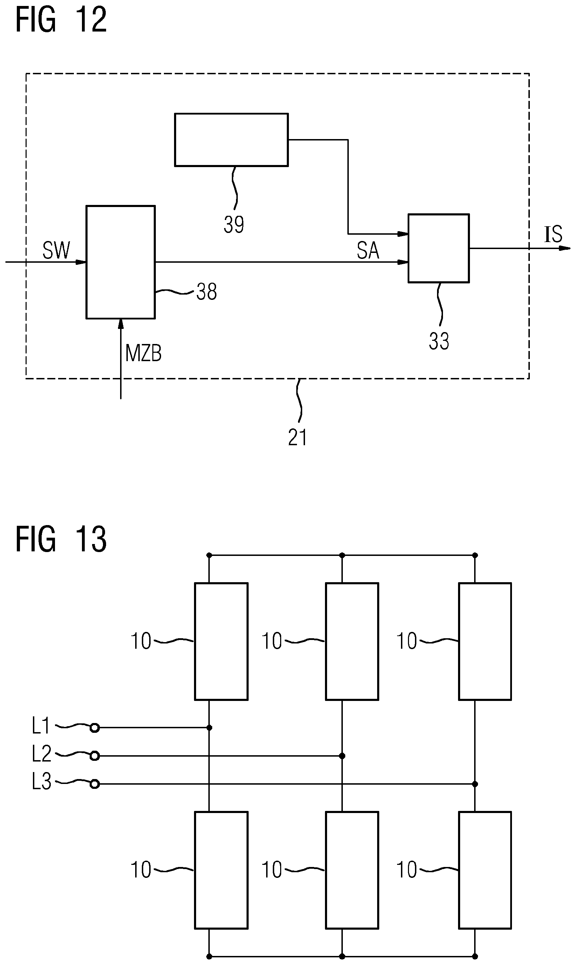

Die Figur 12 zeigt ein Ausführungsbeispiel für eine Sollwertgenerierungseinrichtung 21, die bei der Ansteuereinheit 5 gemäß Figur 8 eingesetzt werden kann.

Die Sollwertgenerierungseinrichtung 21 weist eingangsseitig einen Begrenzer 38 auf, an dem der Blindleistungssollwert SW sowie der von der Betriebsgrenzenanpassungseinrichtung 22 gemäß Figur 8 gebildete Wert MZB, der die maximale zulässige Blindleistung angibt, anliegt.

Der Begrenzer 38 erzeugt ausgangsseitig eine Stromamplitude SA, mit Hilfe derer ein nachgeordneter Produktbildner 33, an dem auch das Ausgangssignal eines Sinusgenerators 39 anliegt, einen Sollstrom Is bildet; der Sollstrom Is wird von dem Vergleicher 23 gemäß Figur 8 weiterverarbeitet. Bei dem Sollstrom Is handelt es sich um ein netzfrequentes Signal, das die Netzfrequenz des Wechselspannungsnetzes 1 gemäß Figur 1 aufweist und zu dieser Netzspannung des Wechselspannungsnetzes 1 um 90 Grad phasenverschoben ist.

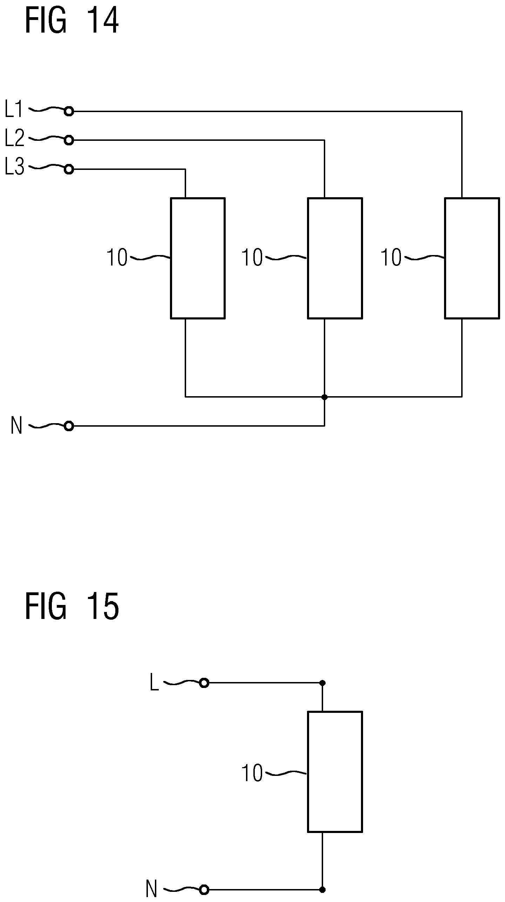

Die Figur 13 zeigt ein weiteres Ausführungsbeispiel für einen Multilevelumrichter 2, der bei der Anordnung gemäß Figur 1 eingesetzt werden kann. Der Multilevelumrichter 2 gemäß Figur 14 wird durch eine Brückenschaltung von sechs Phasenmodulen 10 gebildet, die beispielsweise so ausgestaltet sein können, wie dies beispielhaft im Zusammenhang mit den Figuren 3 bis 7 erläutert wurde.

Die Figur 14 zeigt ein weiteres Ausführungsbeispiel für einen Multilevelumrichter 2, der bei der Anordnung gemäß Figur 1 eingesetzt werden kann. Der Multilevelumrichter 2 gemäß Figur 13 wird durch eine Sternschaltung von drei Phasenmodulen 10 gebildet, die beispielsweise so ausgestaltet sein können, wie dies beispielhaft im Zusammenhang mit den Figuren 3 bis 7 erläutert wurde. Die Phasenleiteranschlüsse sind mit den Bezugszeichen L1, L2 und L3 und der Nullleiteranschluss mit dem Bezugszeichen N bezeichnet.

Die Figur 15 zeigt ein Ausführungsbeispiel für einen Multilevelumrichter 2, der für die Einspeisung der Blindleistung in ein einphasiges Wechselspannungsnetz 1 gemäß Figur 1 geeignet ist. Der Multilevelumrichter 2 gemäß Figur 15 wird durch ein einziges Phasenmodul 10 gebildet, das beispielsweise so ausgestaltet sein kann, wie dies beispielhaft im Zusammenhang mit den Figuren 3 bis 7 erläutert wurde.

### Bezugszeichenliste

- 1: Wechselspannungsnetz
- 2: Multilevelumrichter
- 3: Strommesseinrichtung
- 4: Spannungsmesseinrichtung
- 5: Ansteuereinheit
- 10: Phasenmodule
- 11: Stromsensor
- 12: Induktivität
- 13: Teilmodule
- 14: Umrichtereinheit
- 15: Speichereinheit
- 20: Kondensator
- 21: Sollwertgenerierungseinrichtung
- 22: Betriebsgrenzenanpassungseinrichtung
- 23: Vergleicher
- 24: Stromregler
- 25: Pulsgenerator
- 26: Mittelwertbildner
- 27: Amplitudenfilter
- 28: Betriebsgrenzenkennlinieneinrichtung
- 29: Komparator
- 30: Blindleistungsbegrenzer
- 31: Sinusgenerator
- 32: Kosinusgenerator
- 33: Produktbildner
- 34: Tiefpässe
- 35: Quadrierer
- 36: Summenbildner
- 37: Wurzelbildner
- 38: Begrenzer
- 39: Sinusgenerator
- 131: Spannungsmesseinrichtung

- AC1: Anschluss
- AC2: Anschluss
- ASS: Ansteuersignal
- DC1: Anschluss
- DC2: Anschluss
- DC3: Anschluss
- DC4: Anschluss
- Ip: Phasenmodulstrom
- Ip': Strommesswert
- Is: Sollstrom
- ISW: Amplitudenwert
- KSW: Wert
- L1: äußerer Phasenleiteranschluss
- L2: äußerer Phasenleiteranschluss
- L3: äußerer Phasenleiteranschluss
- MW: Mittelwert
- MZB: Wert
- N: Nullleiteranschluss
- P1: äußerer Anschluss des Phasenmoduls
- P2: äußerer Anschluss des Phasenmoduls
- S1: Schalter
- S2: Schalter
- S3: Schalter
- S4: Schalter
- SA: Stromamplitude
- SK: Komparatorsignal
- Sp: Steuersignal
- SS: Steuersignal
- SW: Blindleistungssollwert
- Uzk: Zwischenkreisspannung
- ZK: Gleichspannungszwischenkreis
- ZSW: Wert

## Patentansprüche

1. Verfahren zum Einspeisen von Blindleistung in ein Wechselspannungsnetz (1) mittels eines modularen Multilevelumrichters (2), der zumindest eine Reihenschaltung mit mindestens zwei in Reihe geschalteten Teilmodulen (13) und einer Induktivität (12) umfasst, wobei jedes Teilmodul (13) jeweils einen eigenen Zwischenkreis (ZK) aufweist,
wobei die Blindleistungserzeugung in Abhängigkeit von der Zwischenkreisspannung (Uzk) zumindest eines der Zwischenkreise (ZK) gesteuert wird,
**dadurch gekennzeichnet, dass**
- die Blindleistungserzeugung reduziert wird, wenn die Amplitude einer Oberschwingung - bezogen auf die Netzfrequenz des Wechselspannungsnetzes (1) - der Zwischenkreisspannung (Uzk) einen Schwellenwert (ZSW, KSW) erreicht oder überschreitet, oder
- ein Spannungsmittelwert (MW) ermittelt wird, der den Mittelwert der Zwischenkreisspannungen (Uzk) der Zwischenkreise (ZK) aller Teilmodule (13) zum jeweiligen Zeitpunkt angibt, und die Blindleistungserzeugung reduziert wird, wenn die Amplitude (ISW) einer Oberschwingung des Spannungsmittelwerts (MW) - bezogen auf die Netzfrequenz des Wechselspannungsnetzes (1) - einen Schwellenwert (ZSW, KSW) erreicht oder überschreitet.

2. Verfahren nach Anspruch 1,
**dadurch gekennzeichnet, dass**
die Blindleistungserzeugung reduziert wird, wenn die Amplitude (ISW) der Oberwelle mit der doppelten Netzfrequenz - bezogen auf die Netzfrequenz des Wechselspannungsnetzes (1) - des Spannungsmittelwerts (MW) den Schwellenwert (ZSW, KSW) erreicht oder überschreitet.

3. Verfahren nach einem der voranstehenden Ansprüche,
**dadurch gekennzeichnet, dass**
das Überwachen der Amplitude (ISW) der Oberwelle mit der doppelten Netzfrequenz dahingehend, ob der Schwellenwert (ZSW, KSW) erreicht oder überschritten wird, unter Einbezug eines Effektivwertbildners oder eines Hüllkurvendetektors erfolgt.

4. Verfahren nach einem der voranstehenden Ansprüche,
**dadurch gekennzeichnet, dass**
für den Vergleich im Falle einer kapazitiven Blindleistungseinspeisung ein erster Schwellenwert und im Falle einer induktiven Blindleistungseinspeisung ein zweiter Schwellenwert, der sich vom ersten Schwellenwert unterscheidet, herangezogen wird.

5. Verfahren nach einem der voranstehenden Ansprüche,
**dadurch gekennzeichnet, dass**
der Schwellenwert oder die Schwellenwerte (ZSW) in Abhängigkeit von dem Gleichanteil des Spannungsmittelwerts oder der Amplitude der Grundschwingung - bezogen auf die Netzfrequenz des Wechselspannungsnetzes (1) - des Spannungsmittelwerts bestimmt werden.

6. Verfahren nach einem der voranstehenden Ansprüche,
**dadurch gekennzeichnet, dass**
der Schwellenwert oder die Schwellenwerte (ZSW) in Abhängigkeit von einer Schwellenwertkennlinie, insbesondere im Falle einer kapazitiven Blindleistungseinspeisung in Abhängigkeit von einer für eine kapazitive Blindleistungseinspeisung vorgegebenen ersten Schwellenwertkennlinie oder im Falle einer induktiven Blindleistungseinspeisung in Abhängigkeit von einer für eine induktive Blindleistungseinspeisung vorgegebenen zweiten Schwellenwertkennlinie, bestimmt werden.

7. Verfahren nach einem der voranstehenden Ansprüche,
**dadurch gekennzeichnet, dass**
das Maß, mit dem die Amplitude (ISW) der Oberschwingung des Spannungsmittelwerts (MW) den Schwellenwert (ZSW, KSW) überschreitet, bestimmt wird und dieses Maß zur Bestimmung des Ausmaßes der Reduktion der Blindleistungseinspeisung herangezogen wird.

8. Verfahren nach einem der voranstehenden Ansprüche,
**dadurch gekennzeichnet, dass**
die Amplitude (ISW) einer Oberschwingung des Spannungsmittelwerts (MW) als Rückkopplungsgröße zur Regelung der Höhe der jeweiligen Blindleistungseinspeisung herangezogen wird.

9. Verfahren nach einem der voranstehenden Ansprüche,
**dadurch gekennzeichnet, dass**
die Teilmodule (13) des Multilevelumrichters (2) derart angesteuert werden, dass durch den Multilevelumrichter (2) ein Kreisstrom fließt, der eine Oberschwingung mit einer Frequenz, die einem ganzzahligen Vielfachen des Dreifachen der Netzfrequenz des Wechselspannungsnetzes (1) entspricht, aufweist.

10. Verfahren nach Anspruch 9,
**dadurch gekennzeichnet, dass**
die Blindleistungserzeugung reduziert wird, wenn die Oberschwingungsamplitude, die sich auf die Oberschwingung mit dem ganzzahligen Vielfachen des Dreifachen der Netzfrequenz bezieht, des Spannungsmittelwerts den Schwellenwert erreicht oder überschreitet.

11. Ansteuereinheit (5) für einen modularen Multilevelumrichter (2), der zumindest eine Reihenschaltung mit mindestens zwei in Reihe geschalteten Teilmodulen (13) und einer Induktivität (12) umfasst, wobei jedes Teilmodul (13) jeweils einen eigenen Zwischenkreis (ZK) aufweist, wobei die Ansteuereinheit (5) derart ausgebildet ist, dass sie den Multilevelumrichter (2) derart ansteuert, dass dieser Blindleistung in ein Wechselspannungsnetz (1) einspeist, wobei die Ansteuereinheit (5) die Zwischenkreisspannung (Uzk) zumindest eines der Zwischenkreise (ZK) des Multilevelumrichters auswertet und die Blindleistungserzeugung in Abhängigkeit davon steuert,
**dadurch gekennzeichnet, dass**
- die Ansteuereinheit (5) derart ausgebildet ist, dass sie die Blindleistungserzeugung reduziert, wenn die Amplitude einer Oberschwingung - bezogen auf die Netzfrequenz des Wechselspannungsnetzes (1) - der Zwischenkreisspannung (Uzk) einen Schwellenwert (ZSW, KSW) erreicht oder überschreitet, oder
- die Ansteuereinheit (5) derart ausgebildet ist, dass sie die Blindleistungserzeugung reduziert, wenn die Amplitude (ISW) einer Oberschwingung eines Spannungsmittelwerts (MW) - bezogen auf die Netzfrequenz des Wechselspannungsnetzes (1) - einen Schwellenwert (ZSW, KSW) erreicht oder überschreitet, wobei der Spannungsmittelwert (MW) den Mittelwert der Zwischenkreisspannungen (Uzk) der Zwischenkreise (ZK) aller Teilmodule (13) zum jeweiligen Zeitpunkt angibt.

12. Anordnung mit einer Ansteuereinheit (5) und einem modularen Multilevelumrichter (2),
**dadurch gekennzeichnet, dass**
die Ansteuereinheit (5) die Merkmale gemäß Anspruch 11 aufweist.

## Claims

1. Method for feeding reactive power into an AC voltage system (1) by means of a modular multilevel converter (2), which comprises at least one series circuit having at least two series-connected submodules (13) and an inductance (12), wherein each submodule (13) has a respective separate intermediate circuit (ZK),
wherein the reactive power generation is controlled depending on the intermediate circuit voltage (Uzk) of at least one of the intermediate circuits (ZK),
**characterized in that**
- the reactive power generation is reduced when the amplitude of a harmonic - based on the system frequency of the AC voltage system (1) - of the intermediate circuit voltage (Uzk) reaches or exceeds a threshold value (ZSW, KSW),
or
- an average voltage value (MW) is ascertained, which indicates the average value of the intermediate circuit voltages (Uzk) of the intermediate circuits (ZK) of all of the submodules (13) at the respective time, and the reactive power generation is reduced when the amplitude (ISW) of a harmonic of the average voltage value (MW) - based on the system frequency of the AC voltage system (1) - reaches or exceeds a threshold value (ZSW, KSW).

2. Method according to Claim 1,
**characterized in that**
the reactive power generation is reduced when the amplitude (ISW) of the harmonic at double the system frequency - based on the system frequency of the AC voltage system (1) - of the average voltage value (MW) reaches or exceeds the threshold value (ZSW, KSW).

3. Method according to either of the preceding claims,
**characterized in that**
the monitoring of the amplitude (ISW) of the harmonic at double the system frequency to determine whether the threshold value (ZSW, KSW) is reached or exceeded is effected using a root mean square value determining circuit or an envelope detector.

4. Method according to one of the preceding claims,
**characterized in that**
in the case of a capacitive reactive power infeed a first threshold value and in the case of an inductive reactive power infeed a second threshold value that differs from the first threshold value is used for the comparison.

5. Method according to one of the preceding claims,
**characterized in that**
the threshold value or the threshold values (ZSW) are determined depending on the DC component of the average voltage value or the amplitude of the fundamental - based on the system frequency of the AC voltage system (1) - of the average voltage value.

6. Method according to one of the preceding claims,
**characterized in that**
the threshold value or the threshold values (ZSW) are determined depending on a threshold value characteristic curve, in particular in the case of a capacitive reactive power infeed depending on a first threshold value
characteristic curve prescribed for a capacitive reactive power infeed or in the case of an inductive reactive power infeed depending on a second threshold value characteristic curve prescribed for an inductive reactive power infeed.

7. Method according to one of the preceding claims,
**characterized in that**
the amount by which the amplitude (ISW) of the harmonic of the average voltage value (MW) exceeds the threshold value (ZSW, KSW) is determined and this amount is used to determine the reduction in the reactive power infeed.

8. Method according to one of the preceding claims,
**characterized in that**
the amplitude (ISW) of a harmonic of the average voltage value (MW) is used as a feedback variable for regulating the level of the respective reactive power infeed.

9. Method according to one of the preceding claims,
**characterized in that**
the submodules (13) of the multilevel converter (2) are actuated in such a way that a circulating current flows through the multilevel converter (2), said current having a harmonic at a frequency that corresponds to an integer multiple of three times the system frequency of the AC voltage system (1).

10. Method according to Claim 9,
**characterized in that**
the reactive power generation is reduced when the harmonic amplitude, which relates to the harmonic at the integer multiple of three times the system frequency, of the average voltage value reaches or exceeds the threshold value.

11. Actuation unit (5) for a modular multilevel converter (2), which comprises at least one series circuit having at least two series-connected submodules (13) and an inductance (12), wherein each submodule (13) has a respective separate intermediate circuit (ZK), wherein the actuation unit (5) is designed in such a way that it actuates the multilevel converter (2) in such a way that it feeds reactive power into an AC voltage system (1), wherein the actuation unit (5) evaluates the intermediate circuit voltage (Uzk) of at least one of the intermediate circuits (ZK) of the multilevel converter and controls the reactive power generation depending thereon
**characterized in that**
- the actuation unit (5) is designed in such a way that it reduces the reactive power generation when the amplitude of a harmonic - based on the system frequency of the AC voltage system (1) - of the intermediate circuit voltage (Uzk) reaches or exceeds a threshold value (ZSW, KSW), or
- the actuation unit (5) is designed in such a way that it reduces the reactive power generation when the amplitude (ISW) of a harmonic of an average voltage value (MW) - based on the system frequency of the AC voltage system (1) - reaches or exceeds a threshold value (ZSW, KSW), wherein the average voltage value (MW) indicates the average value of the intermediate circuit voltages (Uzk) of the intermediate circuits (ZK) of all of the submodules (13) at the respective time.

12. Arrangement having an actuation unit (5) and a modular multilevel converter (2),
**characterized in that**
the actuation unit (5) has the features according to Claim 11.

## Revendications

1. Procédé d'injection de puissance réactive dans un réseau (1) de tension alternative au moyen d'un convertisseur (2) modulaire à plusieurs niveaux, qui comprend au moins un circuit série ayant au moins deux modules (13) partiels montés en série et une inductance (12), chaque module (13) partiel ayant son propre circuit (ZK) intermédiaire, la production de puissance réactive étant commandée en fonction de la tension (Uzk) d'au moins l'un des circuits (ZK) intermédiaires,
**caractérisé en ce que**
- on réduit la production de puissance réactive, si l'amplitude d'un harmonique - rapporté à la fréquence du réseau (1) de tension alternative - de la tension (Uzk) de circuit intermédiaire atteint ou dépasse une valeur (ZSW, KSW) de seuil, ou
- on détermine une valeur (MW) moyenne de tension, qui indique la valeur moyenne des tensions (Uzk) des circuits (ZK) intermédiaires de tous les modules (13) partiels à l'instant respectif et on réduit la production de puissance réactive, si l'amplitude (ISW) d'un harmonique de la valeur (MW) moyenne de tension - rapporté à la fréquence du réseau (1) de tension alternative - atteint ou dépasse une valeur (ZSW, KSW) de seuil.

2. Procédé suivant la revendication 1,
**caractérisé en ce que**
l'on réduit la production de puissance réactive, si l'amplitude (ISW) de l'harmonique ayant la fréquence double du réseau, rapporté à la fréquence du réseau (1) de tension alternative - de la valeur (MW) moyenne de tension atteint ou dépasse la valeur (ZSW, KSW) de seuil.

3. Procédé suivant l'une des revendications précédentes,
**caractérisé en ce que**
le contrôle de l'amplitude (ISW) de l'harmonique ayant la fréquence double du réseau, sur le point de savoir si la valeur (ZSW, KSW) de seuil est atteinte ou dépassée, s'effectue en incorporant un formeur de valeur efficace ou un détecteur de courbe enveloppe.

4. Procédé suivant l'une des revendications précédentes,
**caractérisé en ce que**
l'on tire parti pour la comparaison, dans le cas d'une injection de puissance réactive capacitive, d'une première valeur de seuil et, dans le cas d'une injection de puissance réactive inductive, d'une deuxième valeur de seuil, qui se distingue de la première valeur de seuil.

5. Procédé suivant l'une des revendications précédentes,
**caractérisé en ce que**
l'on détermine la valeur de seuil ou les valeurs (ZSW) de seuil en fonction de la proportion continue dans la moyenne de tension ou de l'amplitude de l'oscillation fondamentale - rapportée à la fréquence du réseau (1) de tension alternative - de la valeur moyenne de tension.

6. Procédé suivant l'une des revendications précédentes,
**caractérisé en ce que**
l'on détermine la valeur de seuil ou les valeurs (ZSW) de seuil en fonction d'une courbe caractéristique de valeur de seuil, notamment dans le cas d'une injection de puissance réactive capacitive, en fonction d'une première courbe caractéristique de valeur de seuil donnée à l'avance pour une injection de puissance réactive capacitive ou, dans le cas d'une injection de puissance réactive inductive, en fonction d'une deuxième courbe caractéristique de valeur de seuil donnée à l'avance pour une injection de puissance réactive inductive.

7. Procédé suivant l'une des revendications précédentes,
**caractérisé en ce que**
l'on détermine le montant, dont l'amplitude (ISW) de l'harmonique de la valeur (MW) moyenne de tension dépasse la valeur (ZSW, KSW) de seuil et on tire parti de ce montant pour déterminer dans quelle mesure on réduit l'injection de puissance réactive.

8. Procédé suivant l'une des revendications précédentes,
**caractérisé en ce que**
l'on tire parti de l'amplitude (ISW) d'un harmonique de la valeur (MW) moyenne de tension, comme grandeur de réaction pour réguler le niveau de l'injection de puissance réactive respective.

9. Procédé suivant l'une des revendications précédentes,
**caractérisé en ce que** l'on commande les modules (13) partiels du convertisseur (2) à plusieurs niveaux, de manière à faire passer, dans le convertisseur (2) à plusieurs niveaux, un courant circulaire, qui a un harmonique ayant une fréquence correspondant à un multiple en nombre entier du triple de la fréquence du réseau (1) de tension alternative.

10. Procédé suivant la revendication 9,
**caractérisé en ce que**
l'on réduit la production de puissance réactive, si l'amplitude de l'harmonique, qui se rapporte à l'harmonique ayant le multiple en nombre entier du triple de la fréquence du réseau de la valeur moyenne de tension, atteint ou dépasse la valeur de seuil.

11. Unité (5) de commande d'un convertisseur (2) modulaire à plusieurs niveau, qui comprend au moins un circuit série ayant au moins deux modules (13) partiels montés en série et une inductance (12), chaque module (13) partiel ayant son propre circuit (ZK) intermédiaire, l'unité (5) de commande étant constituée de manière à commander le convertisseur (2) à plusieurs niveaux, de façon à ce que celui-ci injecte de la puissance réactive dans un réseau (1) de tension alternative, l'unité (5) de commande exploitant la tension (Uzk) d'au moins l'un des circuits (ZK) intermédiaires du convertisseur à plusieurs niveaux et commandant la production de puissance réactive en fonction de cela,
**caractérisé en ce que**
- l'unité (5) de commande est constituée de manière à réduire une production de puissance réactive, si l'amplitude d'un harmonique - rapporté à la fréquence du réseau (1) de tension alternative - de la tension (Uzk) de circuit intermédiaire atteint ou dépasse une valeur (ZSW, KSW) de seuil, ou
- l'unité (5) de commande est constituée de manière à réduire la production de puissance réactive, si l'amplitude (ISW) d'un harmonique d'une valeur (MW) moyenne de tension
- rapporté à la fréquence du réseau (1) de tension alternative - atteint ou dépasse une valeur (ZSW, KSW) de seuil, la valeur (MW) moyenne de tension indiquant la valeur moyenne des tensions (Uzk) des circuits (ZK) intermédiaires de tous les modules (13) partiels à l'instant respectif.

12. Système ayant une unité (5) de commande et un convertisseur (2) modulaire à plusieurs niveaux,
**caractérisé en ce que**
l'unité (5) de commande a les caractéristiques suivant la revendication 11.
